# EUROPEAN PATENT APPLICATION

(11) **EP 2 133 773 A1**
(43) Date of publication of application: **16.12.2009**
(21) Application number: 08738812.0
(22) Date of filing: 25.03.2008
(51) Int. Cl.: G06F 3/033, G06F 3/16, H04M 1/00

(54) **INFORMATION PROCESSING TERMINAL, METHOD FOR CONTROLLING INFORMATION PROCESSING TERMINAL, AND PROGRAM**

(30) Priority: 27.03.2007 JP 2007080535
(71) Applicant: NEC Corporation, Minato-ku Tokyo 108-8001 (JP)
(72) Inventor: YOSHINO, Yukiko, Kodama-gun Saitama 367-0241 (JP)
(74) Representative: Betten & Resch
(86) International application number: PCT/JP2008/055517
(87) International publication number: WO 2008/123223

(57) **Abstract**

An information processing terminal of portable-type having radio communication section which includes an input information reception section which receives input information by a user for controlling operation of a main body of the information processing terminal, a holding state information detecting section which detects holding state information for expressing a holding state by the user of the main body of the information processing terminal, and a control section which controls a predetermined operation of the information processing terminal based on the input information and the holding state information.

## Description

### TECHNICAL FIELD

The present invention relates to an information processing terminal, in particular to an information processing terminal having radio communication means.

### BACKGROUND TECHNIQUE

In recent years, information processing terminals, such as a portable telephone, and the like have rapidly been spread. Not only communication function but also various functions, such as mail function, image recording function, internet inspection function, electronic money function, and the like are mounted in the information processing terminals.

With such a multi-functionalism of the portable telephone, a portable telephone provided with an idea capable of readily operating predetermined functions is proposed (For example, see Patent references 1 through 3).

According to the technique disclosed in Patent reference 1, a tilt sensor for measuring a tilt state of a main body of a portable telephone is mounted inside the portable telephone. For example, when a user had a telephone call (portable telephone is in a receiving state), the tilt sensor is driven to carry out either a telephone answering machine or deletion of the receiving sound by making the main body of the portable telephone be in a reverse state. Accordingly, the user can make the portable telephone carry out functions of the telephone answering machine or the deletion of the receiving sound without key operations of the portable telephone.

However, in a case that the user tries to conduct, for example by his one hand, an operation for making the main body of the portable telephone be in a reverse state, it is dangerous to erroneously drop the portable telephone. The problem thus remains in operability of the portable telephone.

Further, according to the technique disclosed in Patent reference 2, an acceleration detecting means is provided inside a portable telephone. In this portable telephone, acceleration data obtained by the acceleration detecting means is analyzed. Operation mode of the portable telephone is automatically executed in accordance with the result of the analysis.

As an example, when a user had a telephone call, the user continuously pushes a particular key to convert the portable telephone into an acceleration detecting mode. Thereafter, the user confirms that the portable telephone comes into the acceleration detecting mode. Next, the user adds, for example, predetermined times of vibrations with snaps to the portable telephone. Consequently, a manner mode is executed in accordance with the result of the analysis for an acceleration detected by the acceleration detecting means.

In this case, however, it takes time to operate the portable telephone, since the user continuously pushes the particular key to convert the portable telephone into the acceleration detecting mode. This causes a fear that the user becomes incapable of responding to a telephone call quickly, when the user had the telephone call.

Furthermore, according to the technique disclosed in Patent reference 3, an acceleration sensor is provided inside a portable telephone to measure an acceleration applied on the portable telephone. Based on the acceleration thus measured, a user activity state (Standstill, walk, running, vehicle movement, and the like) expressing a state that the user is active at the present is estimated. Accordingly, functions of the portable telephone are selected to be executed in accordance with the user activity state.

However, for example, in a case that the user is moving by train or that the user moves inside a train on foot while the train is stopping, it is difficult to judge the user activity state This causes a fear that the portable telephone comes to an erroneous operation.

Patent references 1: Official Gazette of Japanese unexamined Patent publication 2000-089482,
Patent references 2: Official Gazette of Japanese unexamined Patent publication 2001-144853,
Patent references 3: Official Gazette of Japanese unexamined Patent publication 2005-286809,

### DISCLOSURE OF THE INVENTION

### PROBLEM TO BE SOLVED BY THE INVENTION

In view of the above, it is desirable to provide an information processing terminal which can be prevented from erroneous operation thereof and which is also superior in operability. Further, it is also desirable to consider security with a multi-functionalism of an information processing terminal, such as a portable telephone, and the like.

In view of the above circumstances, it is an object of the present invention to provide an information processing terminal which can be prevented from erroneous operation thereof and which is also superior in operability while considering security, a method of controlling the information processing terminal, and a program for controlling the information processing terminal.

### MEANS FOR SOLVING THE PROBLEM

According to the present invention to achieve the above object, an information processing terminal which is an information processing terminal of portable-type having radio communication means, comprising: input information reception means which receives input information by a user for controlling operation of a main body of the information processing terminal; holding state information detecting means which detects holding state information for expressing a holding state by the user of the main body of the information processing terminal; and control means which controls a predetermined operation of the information processing terminal based on the input information and the holding state information.

According to the information processing terminal of the present invention, the input information by the user for controlling operation of the main body of the information processing terminal is received by the input information reception means. Further, the holding state information for expressing the holding state by the user of the main body of the information processing terminal is detected by the holding state information detecting means. Then, the predetermined operation of the information processing terminal is controlled by the control means based on the input information and the holding state information.

Accordingly, since the predetermined operation of the information processing terminal is controlled based on the input information and the holding state information, security can be saved. This prevents functions of the information processing terminal from being executed on the contrary to the user's intention. Not only erroneous operations of the information processing terminal can be prevented but also key operations by hand input can be reduced to improve operability thereof.

Further, it is preferable that the input information is a voice signal input by the user. Accordingly, if the input information is not the voice signal constituted by a voice of the user, the information processing terminal refuses processing for the input information. Therefore, when the information processing terminal is, for example, rendered to execute processing of an electronic money function, and the like, not only security can be highly saved but also operations for the processing become easy.

In addition, it is preferable that the information processing terminal further comprises: a user identification information storing section which previously stores a user identification information by a voice signal for recognizing the user; a user certification section which conducts a user certification based on the voice signal received by the input information reception means and the user identification information; wherein the control means controls a predetermined operation of the information processing terminal based on a result of the certification by the user certification section and the holding state information.

With the constitution described above, the user identification information storing section previously stores the user identification information by the voice signal for recognizing the user. The user certification section then conducts the user certification based on the voice signal received by the input information reception means and the user identification information. Further, the control means controls a predetermined operation of the information processing terminal based on the result of the certification by the user certification section and the holding state information.

Accordingly, in the information processing terminal, the predetermined operation of the information processing terminal is controlled only by the user succeeded in the user certification. It is therefore possible for the user to implement the user certification with operating the information processing terminal.

In addition, it is preferable that the information processing terminal further comprises: a control contents information storing section which previously stores the holding state information and/or control contents information for controlling the operation of the information processing terminal having correspondence with each voice signal; wherein the control means selects any one of control contents information stored in the control contents information storing section based on the input information by the user certified by the user certification section and the holding state information, and base on the selected control contents information, the control means controls the operation of the information processing terminal.

With the constitution described above, the control contents information storing section previously stores the holding state information and/or control contents information for controlling the operation of the information processing terminal having correspondence with each voice signal. The control means selects any one of the control contents information stored in the control contents information storing section based on the input information by the user certified by the user certification section and the holding state information. The control means then controls the operation of the information processing terminal based on the selected control contents information.

Accordingly, in the information processing terminal, the operation of the information processing terminal is controlled only by the user succeeded in the user certification based on the control contents information stored in the control contents information storing section. Consequently, it is possible to provide an information processing terminal in which operability is improved with security being saved.

Further, it is preferable that the holding state information is information expressing inclination from a predetermined reference figure of the main body of the information processing terminal. Accordingly, it is possible to make the information processing terminal execute operations thereof in correspondence with the information expressing inclination.

Further, it is preferable that the holding state information is information expressing an acceleration of the main body of the information processing terminal. Accordingly, it is possible to make the information processing terminal execute operations thereof in correspondence with the information expressing the acceleration.

Further, it is preferable that the holding state information detecting means is an acceleration sensor which detects the holding state information. By using the acceleration sensor, it is possible to readily detect the above-described information expressing the acceleration and the information expressing the inclination.

Herein, according to the present invention to achieve the above object, a method of controlling the information processing terminal which is an information processing terminal of portable-type having radio communication means, said method comprising: an input information reception step for receiving input information by a user for controlling operation of a main body of the information processing terminal; a holding state information detecting step for detecting holding state information for expressing a holding state by the user of the main body of the information processing terminal; and a control step for controlling a predetermined operation of the information processing terminal based on the input information and the holding state information.

According to the method of controlling the information processing terminal of the present invention, the input information by the user for controlling operation of the main body of the information processing terminal is received by the input information reception step. Further, the holding state information for expressing the holding state by the user of the main body of the information processing terminal is detected by the holding state information detecting step. Then, the predetermined operation of the information processing terminal is controlled by the control step based on the input information and the holding state information.

It is thereby possible to provide a method of controlling an information processing terminal which can be prevented from erroneous operation thereof and which is also superior in operability while considering security.

Herein, according to the present invention to achieve the above object, a program of controlling the information processing terminal which realizes an information processing terminal of portable-type having radio communication means comprising: input information reception means which receives input information by a user for controlling operation of a main body of the information processing terminal; holding state information detecting means which detects holding state information for expressing a holding state by the user of the main body of the information processing terminal; and control means which controls a predetermined operation of the information processing terminal based on the input information and the holding state information.

### EFFECTS OF THE INVENTION

According to the present invention, it is possible to provide an information processing terminal which can be prevented from erroneous operation thereof and which is also superior in operability while considering security, a method of controlling the information processing terminal, and a program for controlling the information processing terminal.

### BRIEF DESCRIPTION OF THE DRAWINGS

[Fig. 1] A front view for showing a portable telephone according to an embodiment of the present invention.
[Fig. 2] A front view for showing a condition of the portable telephone illustrated in Fig. 1 in which the portable telephone is folded.
[Fig. 3] An internal construction view for showing the portable telephone illustrated in Fig. 1.
[Fig.4] A view for showing internal constructions of a control section, ROM, and RAM illustrated in Fig. 3.
[Fig.5] A view for showing an example of control contents information.
[Fig.6] A view for explaining a predetermined reference figure of a main body of the portable telephone detected by a holding state information detecting section.
[Fig.7] A flow chart for explaining a production of voiceprint data for voice certification.
[Fig.8] A flow chart for showing an example of operations of the portable telephone according to the embodiment of the present invention.
[Fig.9] A flow chart for showing an example of operations of the portable telephone according to the embodiment of the present invention.

### DESCRIPTION OF REFERENCE NUMERALS

- 1: portable telephone
- 2: control section
- 3: ROM
- 4: RAM
- 5: acceleration sensor
- 6: voice recognition section
- 7: AUDIO interface (I/F)
- 8: transmitting/receiving section
- 9: CCD
- 10: upper housing
- 11: lower housing
- 12: first display section
- 13: speaker
- 14: operation section
- 15: microphone
- 16: menu change/execution key
- 17: front surface
- 18: second display section
- 19: light-emitting LED
- 20: photographing lens for camera
- 21: user certification section
- 22: holding state information processing section
- 23: timer management section
- 24: operation control section
- 25: state monitoring section
- 31: user identification information storing section
- 32: control contents information storing section
- 41: input information storing section
- 81: antenna
- 91: image signal processing section
- 111: bottom surface
- 131: speaker pronunciation section
- 151: receiver
- 161a, 161b, 161c, 161d: menu change key
- 162: execution key

### BEST MODE FOR CARRYING OUT THE INVENTION

Hereunder, description is made about embodiments of the present invention with reference to the drawings. Herein, description is made as regards an information processing terminal of portable-type operable on the basis of a program of the present invention and a control method of the present invention executed in the information processing terminal.

Besides, hereunder, description will be made by using a portable telephone as an example of the information processing terminal of the present invention. However, this is merely one example thereof. The information processing terminal of the present invention is not restricted to a portable telephone and can be applied to the other information processing terminal of portable-type (for example, PHS[Personal Handyphone System], and the like) having the above features.

### Embodiment 1

### [Constitution]

### <Portable telephone>

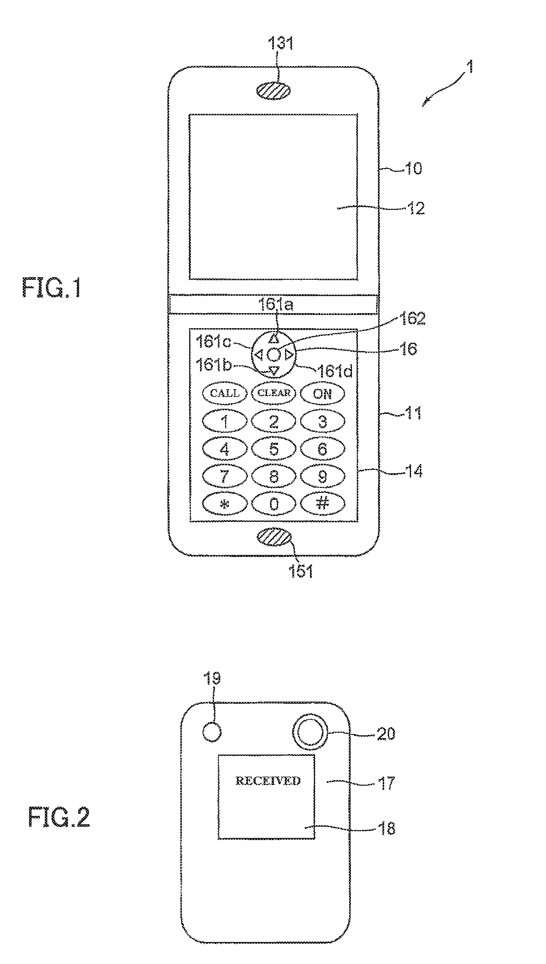

Fig. 1. is a front view for showing a portable telephone according to an embodiment of the present invention. The portable telephone 1 in the present invention is a folding-type portable telephone which comprises an upper housing 10 and a lower housing 11 capable of being freely opened or closed to each other. A first display section 12 and a speaker pronunciation section 131 are provided in the upper housing 10. Then, the first display section 12 is constituted by an LCD (Liquid Crystal Display) for the liquid crystal display to display menu, and the like of the portable telephone 1. On the other hand, the speaker pronunciation section 131 is used for listening to voice from a speaker disposed inside the portable telephone 1.

On the other hand, an operation section 14, a receiver 151 and a menu change/execution key 16 are provided in the lower housing 11. Operation keys, such as ten keys from 1 to 0, * key, #key, and the like are provided in the operation section 14. After receiving operation of the operation key, the operation section 14 transfers an order of processing of each operation key to a control section 2 as will later be described. In addition, the receiver 151 is used for introducing a user's voice to a microphone disposed inside the portable telephone.

Further, the menu change/execution key 16 comprises four menu change keys (161a∼161d) and an execution key 162. The user willingly changes menu, and the like displayed in the first display section 12 by the menu change keys (161a∼161d) to select a setting condition. The user then makes the portable telephone execute an operation of the selected setting condition by pushing the execution key 162 down.

Fig. 2 is a front view for showing a condition of the portable telephone illustrated in Fig. 1 in which the portable telephone is folded. A second display section 18, a light-emitting LED (Light Emitting Diode) 19 and a photographing lens for camera 20 are provided in the front surface 17 of the portable telephone 1. The second display section 18 is also constituted by an LCD and displays in the screen thereof that the portable telephone 1 is receiving a voice call, when the portable telephone 1 received the voice call. The light-emitting LED 19 is used for emitting light, when the portable telephone received a call, to inform the user of the reception of the call. In this embodiment, in a case of the reception of the call, if the user converts the portable telephone 1 from the folded condition (closed condition) illustrated in Fig. 2 into the opened condition (opened condition) as illustrated in Fig. 1, an acceleration sensor is switched into ON, as will later be described.

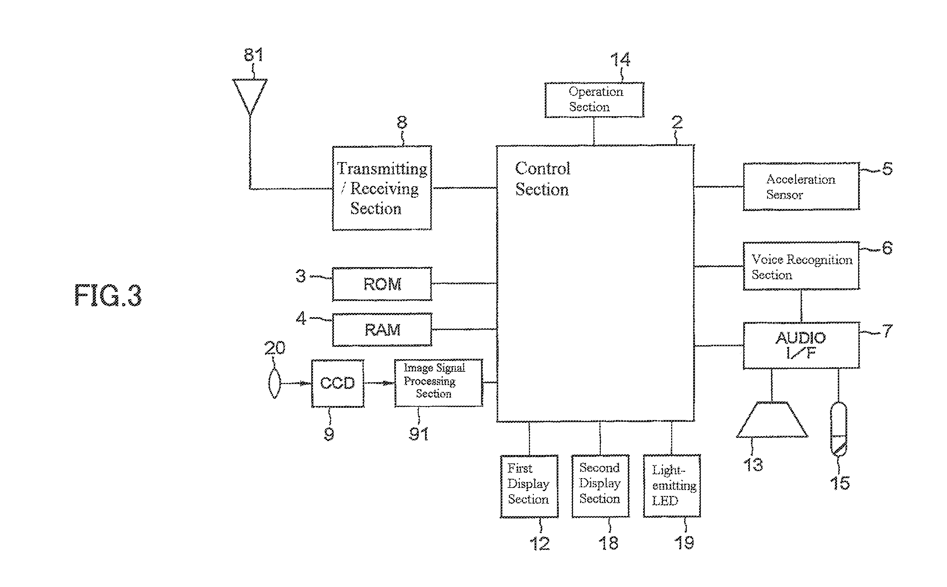

Fig.3 is an internal construction view for showing the portable telephone illustrated in Fig. 1. The control section 2, ROM (Read Only Memory) 3, RAM (Random Access Memory) 4, the acceleration sensor 5, a voice recognition section 6, an AUDIO interface (I/F) 7, a speaker 13 and a microphone 15 are provided in the portable telephone 1.

The control section 2 is a central processing unit (CPU: Central Processing Unit) to totally control operations of the portable telephone 1. Further, ROM 3 is a memory capable of deleting and writing data. RAM 4 temporally stores control data used when processing is conducted by the control section 2.

The acceleration sensor 5 is a sensor for measuring an acceleration in a three-dimensional direction (three axis direction of X axis, Y axis and Z axis perpendicular to each other). Detected value in each axis direction detected by the acceleration sensor 5 is transmitted to the control section 2. Thereby, an inclination angle of the portable telephone is calculated by a holding state information processing section 22 as will later be described.

The AUDIO interface (I/F) 7 converts a digital signal into an analog signal and outputs the converted analog signal to the speaker 13. Or else, the AUDIO interface (I/F) 7 converts the user's voice signal (analog signal) input from the microphone 15 into a digital signal and outputs the converted digital signal to the voice recognition section 6.

The voice recognition section 6 has a DSP (Digital Signal Processor) which extracts a characterized amount of a voice by the user from the digital signal to produce voiceprint data of the user. The voiceprint data produced by the voice recognition section 6 is used for user certification in a user certification section 21 as will later be described.

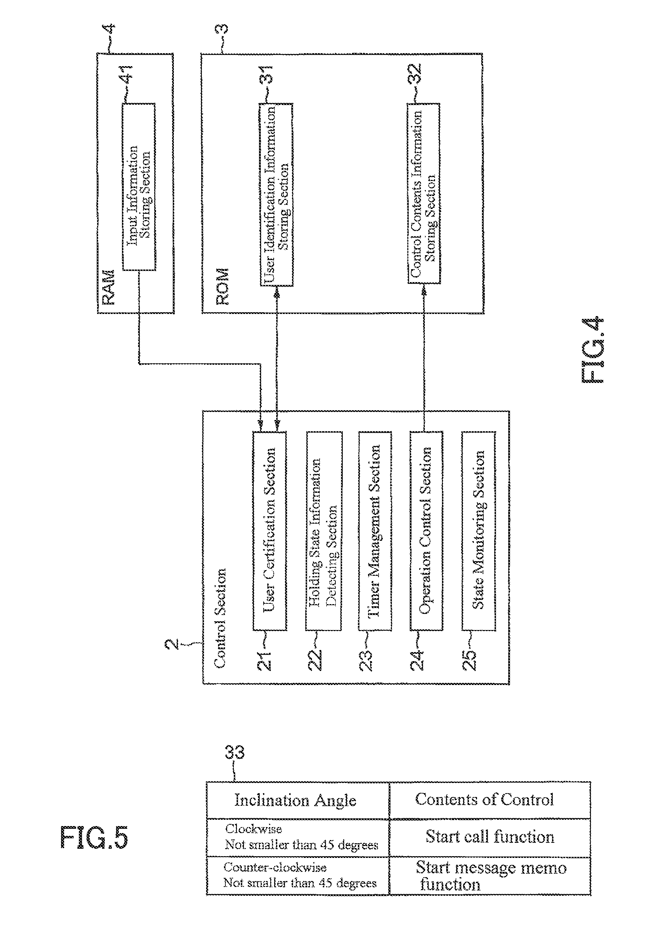

Fig.4 is a view for showing internal constructions of the control section, ROM, and RAM illustrated in Fig. 3. Two kinds of storing sections, such as a user identification information storing section 31 and a control contents information storing section 32 are formed in the ROM 3. The user identification information storing section 31 previously stores the voiceprint data for user certification produced by the voice recognition section 6. The voiceprint data is equal to an example of user identification information in the present invention. An input information storing section 41 is formed in the RAM 4. The voiceprint data produced based on the voice signal input from the microphone 15 is temporally stored in the input information storing section 41 at the time of the voice recognition.

Further, a correspondence list making parameter range (range of inclination angle) detected by the acceleration sensor 5 be corresponding to functions of applications is stored in the control contents information storing section 32. When the user wants to look up the correspondence list, the user can render the correspondence list to be displayed in the first display section 12 by the use of the menu change/execution key 16. In addition, the user can voluntary set the correspondence list.

Fig.5 is a view for showing an example of control contents information. As shown in Fig. 5, about the inclination angle of the portable telephone 1 detected by the acceleration sensor 5, if a condition that the portable telephone 1 is inclined clockwise by not smaller than 45 degrees from a condition of reference figure is maintained for one second or more, a call function starts up. On the other hand, if a condition that the portable telephone 1 is inclined counter-clockwise by not smaller than 45 degrees from a condition of reference figure is maintained for one second or more, a message function starts up, as also shown in Fig. 5. Description will later be made about the reference figure.

Further, as illustrated in Fig. 4, a program stored in the ROM 3 according to an embodiment of the present invention is incorporated in the control section 2 to constitute the user certification section 21, the holding state information processing section 22, the timer management section 23, the operation control section 24 and the state monitoring section 25.

The user certification section 21 compares a voiceprint data at the time of using the portable telephone stored in the input information storing section 41 with the user's voiceprint data previously stored in the user identification information storing section 31 to conduct a certification whether or not both voiceprint data are identical with each other.

Based on an inclination angle of the portable telephone 1 detected by the acceleration sensor 5, the holding state information processing section 22 decides contents of control with reference to the correspondence list of the control contents information storing section 32 illustrated in Fig. 5. The timer management section 23 detects whether or not the inclination angle is kept by not smaller than a predetermined angle for one second or more. The operation control section 24 executes the decided contents of control (control means), when not only the user certification is correct but also the inclination angle is kept by not smaller than a predetermined angle for one second or more. The state monitoring section 25 monitors states, such as waiting/speaking/operating/alarm ringing, and the like. In addition, the state monitoring section 25 monitors opening and closing of the portable telephone 1. The state monitoring section 25 makes the acceleration sensor 5 be operable, when the portable telephone 1 is changed from the closed condition into the opened condition.

The holding state information processing section 22 detects an inclination angle from a predetermined reference figure of a main body of the portable telephone based on the measured data by the acceleration sensor 5 (holding state information detecting means). In this embodiment, the predetermined reference figure of the main body of the portable telephone is defined as follows.

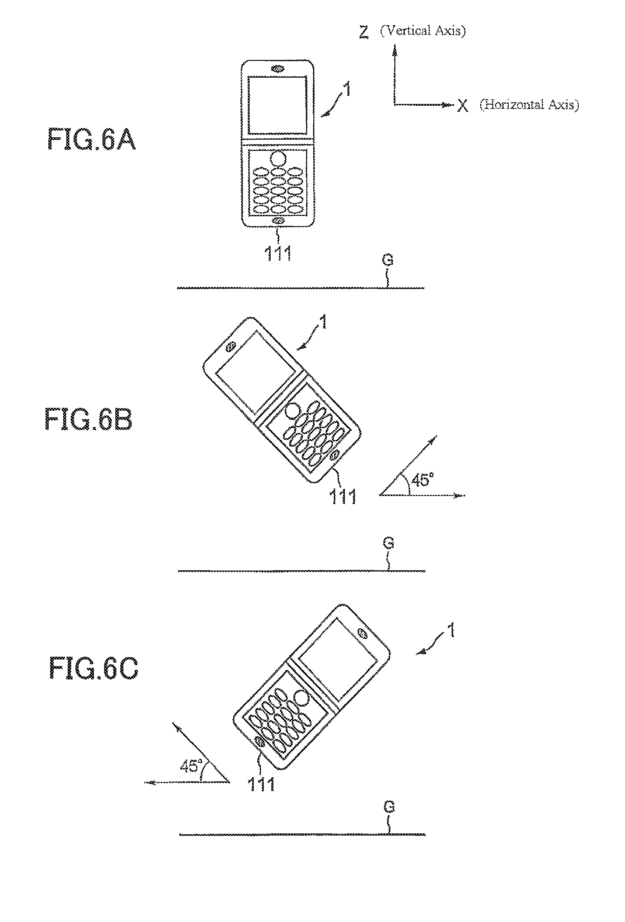

Fig.6 is a view for explaining a predetermined reference figure of the main body of the portable telephone detected by the holding state information processing section 22. In Fig. 6A, illustrated is a state that a user (not shown) makes the portable telephone 1 of folding-type be opened condition in a front of the user himself and also that he has the portable telephone 1 in a standing up condition. In this embodiment, the reference figure is a state that a bottom surface 111 of the lower housing 11 of the portable telephone 1 is kept horizontal to the ground surface G (horizontal surface). Further, the inclination angle expressing how the portable telephone 1 is inclined is defined as an angle made by the bottom surface 111 of the lower housing 11 of the portable telephone 1 with respect to the ground surface G (horizontal surface).

In this embodiment, for the brevity of explanation, with respect to the ground surface G (horizontal surface), a vertical direction is defined as Z axis (vertical axis) while a horizontal direction is defined as X axis (horizontal axis), as shown in Fig. 6A. Further, it is assumed that the user makes the portable telephone 1 be inclined clockwise or counter-clockwise and that inclination of the portable telephone 1 in a direction of Y axis perpendicular to X axis, Z axis, respectively can be ignored. Herein, an angle (inclination angle) made with respect to the ground surface G (horizontal surface) is introduced based on an angle included in an acceleration component at the time that the user makes the portable telephone 1 be inclined clockwise or counter-clockwise. Therefore, the holding state information processing section 22 calculates the above-described inclination angle of the portable telephone 1 based on the result of detection by the acceleration sensor 5. The inclination angle thus calculated is equal to an example of holding state information in the present invention.

Fig. 6B is a view for showing a state that the user (not shown) makes the portable telephone 1 be inclined counter-clockwise and thereby the bottom surface 111 of the lower housing 11 of the portable telephone 1 is kept to have an inclination angle of not smaller than 45 degrees with respect to the ground surface G (horizontal surface). In a case that the user certification is correct, a message memo function of the portable telephone 1 starts by the state being kept for one second or more.

Fig. 6C is a view for showing a state that the user (not shown) makes the portable telephone 1 be inclined clockwise and thereby the bottom surface 111 of the lower housing 11 of the portable telephone 1 is kept to have an inclination angle of not smaller than 45 degrees with respect to the ground surface G (horizontal surface). In a case that the user certification is correct, a call function of the portable telephone 1 starts by the state being kept for one second or more.

Further, as shown in Fig. 3, a transmitting/receiving section 8 and an antenna 81 are provided in the portable telephone 1. The antenna 81 catches electric waves for reception and transmission, such as a voice reception, an electronic mail reception, and the like to be transferred to the transmitting/receiving section 8. The transmitting/receiving section 8 decodes a high frequency signal received through the antenna 81 and then outputs data, and the like obtained by the decode to the control section 2. In addition, the transmitting/receiving section 8 modulates letter data, voice signal, and the like supplied from the control section 2 into the high frequency signal and then transmits the high frequency signal from the antenna 81 as a carrier wave of high frequency.

Further, a photographing lens for camera 20, a CCD (Charge Coupled Device) 9 and an image signal processing section 91 are provided in the portable telephone 1. The CCD 9 is a solid-state image sensing element which captures an objective light through the photographing lens for camera 20 to produce an image signal. The image signal processing section 91 conducts image processing such as A/D conversion processing, brightness compensation processing by white balance, and the like in order to convert the image signal produced by the CCD 9 into image data capable of being displayed. The image data produced by the image signal processing section 91 is stored in the ROM 3.

### [Operation]

Next, description is made about operations of the portable telephone 1.

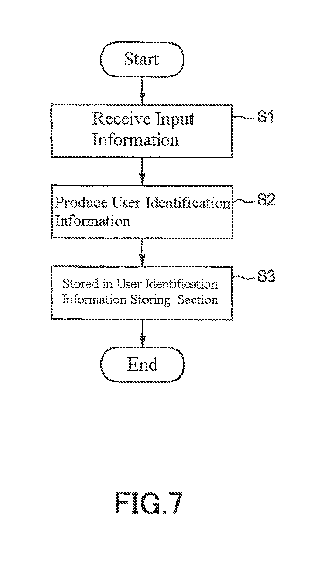

Fig. 7 is a flow chart for explaining a production of voiceprint data for voice certification.

In this embodiment, in order to previously produce a user's voiceprint data, the user reads sentences for producing the voiceprint data with his voice and thereby a voice signal (an analog signal) is input from the microphone 15 illustrated in Fig. 3 to the portable telephone 1. The voice signal (analog signal) is converted by the AUDIO interface (I/F) 7 into a digital signal to be output to the voice recognition section 6 (step S1).

Next, the voice recognition section 6 extracts a characterized amount of a voice by the user from the digital signal to produce voiceprint data of the user (step S2).

Successively, the voiceprint data is stored in a user identification information storing section 31 illustrated in Fig. 4 as data for user certification (step S3).

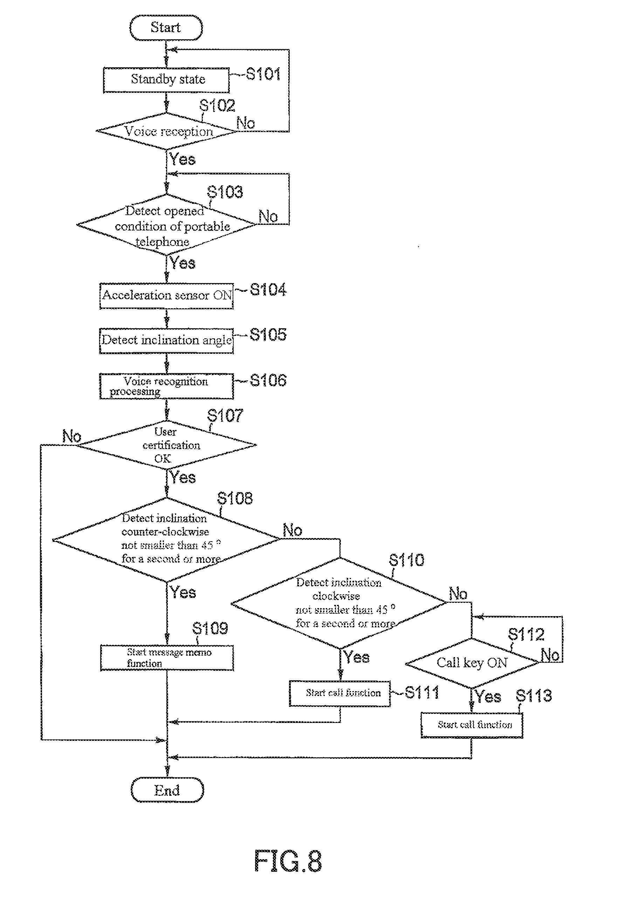

Fig.8 is a flow chart for showing an example of operations of the portable telephone according to the embodiment of the present invention.

At first, a processing routine of the flow chart illustrated in Fig. 8 starts after the user switched a power supply of the portable telephone 1 into ON, thereby the portable telephone 1 changes its state into a waiting state (step S101). Besides, it is assumed that the portable telephone 1 has been folded by the user after the power supply thereof was switched into ON. Next, when a voice is received, the light-emitting LED 19 shown in Fig. 2 emits light and a message "Received" is displayed in the second display section 18 (step S102: Yes). Besides, when a voice is not received (step S102: No), the portable telephone 1 returns to the waiting state of step S101.

Herein, when the user opens the portable telephone 1 of thus folded condition, the state monitoring section 25 shown in Fig. 4 detects that the portable telephone 1 has been changed from a closed condition into an opened condition (step S103: Yes). In this case, it is assumed that the user makes the portable telephone 1 of folding-type be opened condition in a front of the user himself and also that he has the portable telephone 1 in a standing up condition. Successively, the state monitoring section 25 makes the acceleration sensor 5 shown in Fig. 3 be operable (step S104). Besides, the portable telephone 1 has not been changed from a closed condition into an opened condition (step S103: No), step 103 loops until the portable telephone 1 has become the opened condition.

If the acceleration sensor 5 becomes operable, the holding state information processing section 22 shown in Fig. 2 detects the inclination angle of the portable telephone 1 (holding state information detecting step, step S105).

Next, a voice recognition is conducted for the user certification (input information receiving step, step S106). Concretely, if the user utters, for example, "call" for the user certification, a voice signal (an analog signal) by the user is input into the microphone 15 shown in Fig. 3. The voice signal is converted by the AUDIO interface (I/F) 7 into a digital signal to be output to the voice recognition section 6.

The voice recognition section 6 extracts a characterized amount of a voice from the digital signal expressing "call" to produce voiceprint data of the user. The voiceprint data is temporally stored in the input information storing section 41 of the RAM 4 shown in Fig. 4. Then, the user certification section 21 conducts the user certification (step S107). Concretely, the user certification section 21 compares a voiceprint data recognized by the voice recognition section 6 with the user's voiceprint data previously stored in the user identification information storing section 31 with reference to the input information storing section 41 to conduct a certification whether or not both voiceprint data are identical with each other.

If both voiceprint data are identical with each other, a judgment that the user certification is correct is made (step S107: Yes). If the portable telephone 1 is kept counterclockwise to have an inclination angle of not smaller than 45 degrees for one second or more (step S108: Yes), the operation control section 24 makes a message memo function of the portable telephone 1 start (step S109). When the message memo function is finished, the processing routine becomes end.

On the other hand, if the portable telephone 1 is not kept counter-clockwise to have an inclination angle of not smaller than 45 degrees for one second or more (step S108: No) but kept clockwise to have an inclination angle of not smaller than 45 degrees for one second or more (step S110: Yes), the operation control section 24 makes a call function of the portable telephone 1 start (step S111). When the call function is finished, the processing routine becomes end.

Further, if the portable telephone 1 is not kept clockwise to have an inclination angle of not smaller than 45 degrees for one second or more at the step S110, the operation control section 24 waits for a call key shown in Fig. 1 being pushed down (step S112). If the call key is pushed down (step S112: Yes), the operation control section 24 makes a call function of the portable telephone 1 start (step S113). When the call function is finished, the processing routine becomes end. On the other hand, if the call key is not pushed down (step S112: No), step S112 loops.

Herein, if both voiceprint data are not identical with each other (step S107: No) in the processing of the user certification of step S107, the processing routine becomes end.

These steps from S107 to S113 is equal to an example of control step in the present invention.

### Embodiment 2

### [Constitution]

Next, description proceed to a second embodiment of the present invention. Besides, although a part of internal constitutions of the first and the second embodiments of the present invention are different from each other, the other parts thereof have substantially similar constitutions. Therefore, similar portions are designated by like reference numerals and explanation thereof are omitted accordingly. Detailed description will be made about only constitutions of the second embodiment different from those of the first embodiment.

In the second embodiment of the present invention, assumed is such a case in which an electronic money function and an electronic key function are used. When the user changes the portable telephone from the closed condition into the opened condition, the processing of the voice recognition section becomes operable. If the user certification was conducted correctly, the acceleration sensor becomes operable. Then, the electronic money function or the electronic key function is executed in accordance with the result of detection of the inclination angle of the portable telephone 1.

### <Portable telephone>

In the second embodiment, an RFID (Radio Frequency IDentification) tug (not shown) is further provided in addition to the portable telephone of the first embodiment. The operation control section 24 makes a communication processing be conducted between the RFID tug of the portable telephone and an RFID reader/writer, that is an external radio communication apparatus. The operation control section 24 thereby executes an application of the electronic money function or the electronic key function.

Further, according to the second embodiment, the start of the call function in the control contents information shown in Fig. 5 is replaced with a start of the electronic money function while the start of the message memo function therein is replaced with a start of the electronic key function. Besides, these functions are merely one example of the second embodiment. The functions of the present invention are not restricted to the electronic money function and the electronic key function. The functions of the present invention may be the other functions utilizing the RFID tug, such as a ticket function, and the like.

Next, description is made about operations of the portable telephone in the second embodiment.

### [Operations]

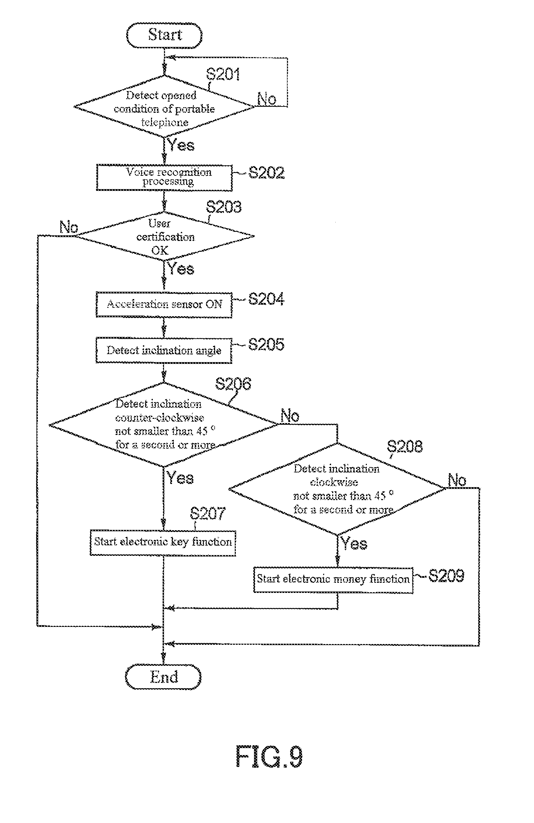

Fig. 9 is a flow chart for showing an example of operations of the portable telephone according to the embodiment of the present invention.

At first, a processing routine of the flow chart illustrated in Fig. 9 starts after the user switched a power supply of the portable telephone 1 into ON, thereby the portable telephone 1 changes its state into a waiting state. Besides, it is assumed that the portable telephone 1 has been folded by the user after the power supply thereof was switched into ON.

Herein, the state monitoring section 25 shown in Fig. 4 monitors whether or not the portable telephone 1 has been changed from a closed condition into an opened condition (step S201). When the state monitoring section 25 detects that the portable telephone 1 has been changed by the user from the closed condition into the opened condition (step S201: Yes), The voice recognition is conducted for the user certification, as described above, in the voice recognition section 6 shown in Fig. 3 (step S202). Besides, the portable telephone 1 has not been changed from the closed condition into the opened condition (step S201: No), the step S201 loops.

Then, the user certification section 21 conducts the user certification (step S203). If a judgment that the user certification is correct is made (step S203: Yes), the acceleration sensor 5 starts its operation (step S204). On the other hand, a judgment that the user certification is not correct is made (step S203: No), the processing routine becomes end. The electronic money function or the electronic key function is not executed.

When the acceleration sensor 5 becomes operable, the holding state information processing section 22 shown in Fig. 2 detects an inclination angle of the portable telephone 1 (step S205). As a result of detection of the inclination angle, if the portable telephone 1 is kept counter-clockwise to have an inclination angle of not smaller than 45 degrees for one second or more (step S206: Yes), the operation control section 24 makes the electronic key function of the portable telephone 1 start. When the user makes the portable telephone 1 be close toward the RFID reader/writer for the electronic key function to a distance capable of short distance wireless communication, the operation control section 24 has a communication with the RFID reader/writer for the electronic key function through an RFID tug. The user can thereby enter a predetermined room. When the electronic key function is completed, the processing routine becomes end.

On the other hand, as a result of detection of the inclination angle, if the portable telephone 1 is not kept counter-clockwise to have an inclination angle of not smaller than 45 degrees for one second or more (step S206: No) but kept clockwise to have an inclination angle of not smaller than 45 degrees for one second or more (step S208: Yes), the operation control section 24 makes the electronic money function of the portable telephone 1 start. When the user makes the portable telephone 1 be close toward the RFID reader/writer for the electronic money function to a distance capable of short distance wireless communication, the operation control section 24 has a communication with the RFID reader/writer for the electronic money function through an RFID tug. The user can thereby settle an account of the electronic money. When the electronic money function is completed, the processing routine becomes end.

Further, if the portable telephone 1 is not kept clockwise to have an inclination angle of not smaller than 45 degrees for one second or more at the step S208, the processing routine becomes end.

As mentioned above, it is possible to provide an information processing terminal which can be prevented from erroneous operation thereof, of which predetermined functions can be readily operable and which is thereby superior in operability while considering security.

Besides, in the above embodiment, a timing for conducting the user certification may be either before or after the acceleration sensor starts its operation. Alternatively, the user certification and the detection of the inclination angle by the acceleration sensor may be conducted at the same time to execute the above-mentioned functions.

Further, in the above embodiment, the user's voiceprint data is used as a user identification information for the user certification. The user identification information is not restricted to the user's voiceprint data. For example, image data of the user's face may be used as a user identification information for the user certification.

In this case, the user's face is previously photographed from the photographing lens for camera 20 shown in Fig. 2. A still image data of the user's face is stored in the user identification information storing section shown in Fig. 4. For example, the user makes a camera function of the portable telephone 1 be ON and then makes the photographing lens for camera 20 shown in Fig. 2 be turned in a front of the user himself with the portable telephone 1 being the closed condition. The CCD 9 thereby captures an object light of the user's face through the photographing lens for camera 20 to produce an image signal. Successively, an image signal processing section 91 produces the image data of the user's face. The image data of the user's face may be compared with an image data of the user's face stored in the user identification information storing section. If the user certification is correct, the electronic key function or the electronic money function may be executed by conducting the processing after the step S204 (the acceleration sensor ON) shown in Fig. 9.

Furthermore, a fingerprint certification means may be newly provided in the portable telephone 1 and thereby the user's fingerprint may be used as the user identification information.

### POSSIBILITY OF INDUSTRIAL USE

The present invention can be used in an information processing terminal of portable-type and therefore has a possibility of industrial use.

## Claims

1. An information processing terminal of portable-type having radio communication means, comprising
input information reception means which receives input information by a user for controlling operation of a main body of the information processing terminal;
holding state information detecting means which detects holding state information for expressing a holding state by the user of the main body of the information processing terminal; and
control means which controls a predetermined operation of the information processing terminal based on the input information and the holding state information.

2. An information processing terminal as claimed in claim 1, wherein the input information is a voice signal input by the user.

3. An information processing terminal as claimed in claim 2, further comprising: a user identification information storing section which previously stores a user identification information by a voice signal for recognizing the user; a user certification section which conducts a user certification based on the voice signal received by the input information reception means and the user identification information; wherein the control means controls a predetermined operation of the information processing terminal based on a result of the certification by the user certification section and the holding state information.

4. An information processing terminal as claimed in claim 3, further comprising: a control contents information storing section which previously stores the holding state information and/or control contents information for controlling the operation of the information processing terminal having correspondence with each voice signal; wherein the control means selects any one of control contents information stored in the control contents information storing section based on the input information by the user certified by the user certification section and the holding state information, and base on the selected control contents information, the control means controls the operation of the information processing terminal.

5. An information processing terminal as claimed in claim 1, wherein the holding state information is information expressing inclination from a predetermined reference figure of the main body of the information processing terminal.

6. An information processing terminal as claimed in claim 1, wherein the holding state information is information expressing an acceleration of the main body of the information processing terminal.

7. An information processing terminal as claimed in claim 1, wherein the holding state information detecting means is an acceleration sensor which detects the holding state information.

8. A method of controlling an information processing terminal of portable-type having radio communication means, said method comprising:
an input information reception step for receiving input information by a user for controlling operation of a main body of the information processing terminal;
a holding state information detecting step for detecting holding state information for expressing a holding state by the user of the main body of the information processing terminal; and
a control step for controlling a predetermined operation of the information processing terminal based on the input information and the holding state information.

9. A program of realizing an information processing terminal of portable-type having radio communication means comprising:
input information reception means which receives input information by a user for controlling operation of a main body of the information processing terminal;
holding state information detecting means which detects holding state information for expressing a holding state by the user of the main body of the information processing terminal; and
control means which controls a predetermined operation of the information processing terminal based on the input information and the holding state information.
